# EUROPÄISCHE PATENTSCHRIFT

(11) **EP 3 814 208 B1**
(45) Veröffentlichungstag und Bekanntmachung des Hinweises auf die Patenterteilung: **30.04.2025**
(21) Anmeldenummer: 19732552.5
(22) Anmeldetag: 11.06.2019
(51) Int. Cl.: B62J 9/00, A44B 11/26, H01R 13/627

(54) **FESTLEGEEINRICHTUNG ZUM LÖSBAREN FESTLEGEN EINES KÖRPERS AN EINEM KRAFTFAHRZEUG SOWIE GEPÄCKTRAGEVORRICHTUNG**
FIXING DEVICE FOR DETACHABLY FIXING A BODY TO A MOTOR VEHICLE, AND LUGGAGE-CARRYING DEVICE
DISPOSITIF DE FIXATION PERMETTANT LA FIXATION AMOVIBLE D'UN CORPS SUR UN VÉHICULE AUTOMOBILE ET DISPOSITIF PORTE-BAGAGE

(30) Priorität: 26.06.2018 DE 102018210353
(43) Veröffentlichungstag der Anmeldung: 05.05.2021
(73) Patentinhaber: Bayerische Motoren Werke Aktiengesellschaft, 80809 München (DE)
(72) Erfinder: GOLLING, Adrian, 82194 Gröbenzell (DE)
(86) Internationale Anmeldenummer: PCT/EP2019/065198
(87) Internationale Veröffentlichungsnummer: WO 2020/001973

(56) Entgegenhaltungen:
- EP-A1- 1 813 516
- WO-A2-03/058763
- WO-A2-2006/065303
- US-A1- 2002 146 917
- US-A1- 2004 040 992
- US-A1- 2005 014 408
- US-A1- 2009 091 292
- US-A1- 2014 073 161
- US-A1- 2016 015 132

## Beschreibung

Die Erfindung betrifft ein System aus Kraftfahrzeug, wie Neigefahrzeug, und Körper, mit einer Festlegeeinrichtung zum lösbaren Festlegen des Körpers an dem Kraftfahrzeug die mindestens ein erstes Festlegemittel, das am Körper festgelegt ist, die mindestens ein zweites Festlegemittel, das an einer lastaufnehmenden Fahrzeugkomponente des Kraftfahrzeugs festgelegt ist und das mit dem ersten Festlegemittel in einer gekoppelten Anordnung lösbar gefügt ist, um den Körper an der Fahrzeugkomponente festzulegen, und die mindestens eine elektrische Leitung umfasst, die von der Fahrzeugkomponente zum Körper geführt und am Körper zum Versorgen eines elektrischen Verbrauchers festgelegt ist, wobei das erste Festlegemittel ein erstes Leitmittel der elektrischen Leitung und das zweite Festlegemittel ein zweites Leitmittel der elektrischen Leitung umfasst, wobei das erste Leitmittel und das zweite Leitmittel in der gekoppelten Anordnung der Festlegemittel miteinander elektrisch leitend verbunden sind und wobei das erste Festlegemittel an seinem dem zweiten Festlegemittel zugewandten Ende ein mechanisches erstes Koppelelement umfasst, an dem das zweite Festlegemittel mit einem zweiten Koppelelement, das an dem dem ersten Koppelelement zugewandten Ende des zweiten Koppelelements angeordnet ist, lösbar festlegbar ist

Es ist bekannt, Körper, beispielsweise Gepäckbehältnisses, an Kraftfahrzeugen festzulegen. In dem jeweiligen Körper können Gegenstände außerhalb eines Fahrzeuggehäuses gehalten bevorratet werden. Dieses erweist sich insbesondere dann als vorteilhaft, wenn das Kraftfahrzeug ein Neigefahrzeug umfasst, bei dem zum Transport von Gegenständen wenig Stauraum im Fahrzeuggehäuse des Neigefahrzeugs vorhanden ist.

Darüber hinaus ist es bekannt, eine elektrische Leitung von der Fahrzeugkomponente des Kraftfahrzeugs zum Körper zu führen, um einen dort angeordneten elektrischen Verbraucher mit elektrischer Energie zu versorgen. Hierbei kann der elektrische Verbraucher beispielsweise ein Mobilfunkgerät, ein Navigationsgerät oder Dergleichen umfassen.

Die elektrische Leitung, die von der Fahrzeugkomponente zum Körper geführt wird, muss hierbei durch den Fahrer des Kraftfahrzeugs bei jeder Benutzung manuell gefügt und wieder gelöst werden, was sich als zeitaufwendig und umständlich herausgestellt hat.

Ein gattungsgemäßes System ist bekannt aus EP 1 813 516 A1.

Verbindungselemente zum Herstellen einer elektrischen Verbindung, ohne Zugkräfte eines Körpers aufzunehmen, sind bekannt aus US 2004/040992 A1, US 2005/014408 A1 und WO 2003/058763 A3

Eine Aufgabe eines Ausführungsbeispiels der Erfindung ist, ein System aus Kraftfahrzeug, wie Neigefahrzeug, und Körper, bei dem das Herstellen einer elektrischen Leitung zwischen Fahrzeugkomponente und Körper erleichtert ist.

Diese Aufgabe wird bei einem eingangs genannten System dadurch gelöst, dass das erste Koppelelement mindestens ein Schnappglied umfasst, das beim Fügen des zweiten Koppelelements an das erste Koppelelement quer oder schräg zur Fügerichtung bewegbar und in der gekoppelten Anordnung in mindestens einer Aussparung des zweiten Koppelelements quer oder schräg zur Fügerichtung einrastbar ist und entgegen der Fügerichtung einen Hintergriff bildet.

Dadurch, dass das erste Festlegemittel an seinem dem zweiten Festlegemittel zugewandten Ende ein mechanisches erstes Koppelelement umfasst, an dem das zweite Festlegemittel mit einem zweiten Koppelelement, das an dem dem ersten Koppelelement zugewandten Ende des zweiten Koppelelements angeordnet ist, lösbar festlegbar ist, ist ein Koppeln, bzw. ein aneinander Festlegen des ersten Festlegemittels an dem zweiten Festlegemittel zu erleichtert.

Solchenfalls werden das erste Koppelelement und das zweite Koppelelement miteinander verclipst.

Dadurch, dass das erste Festlegemittel ein erstes Leitmittel und das zweite Festlegemittel ein zweites Leitmittel umfasst, wird automatisch und auf einfache Weise beim Koppeln des ersten Festlegemittels mit dem zweiten Festlegemittel die elektrische Leitung von der Fahrzeugkomponente zum Körper hergestellt.

Die Fahrzeugkomponente kann beispielsweise ein Fahrzeuggehäuse, eine Lenkeinheit oder eine Verkleidung des Kraftfahrzeugs umfassen.

Unter einem Neigefahrzeug werden Fahrräder, Motorräder oder motorradähnliche Kraftfahrzeuge, wie Motorroller, insbesondere zwei-, drei- oder vierrädrige Motorroller, Scooter, neigbare Trikes, Quads oder Dergleichen verstanden.

Es erweist sich als vorteilhaft, wenn das erste Leitmittel und das zweite Leitmittel kabelartig und/oder als von dem ersten Festlegemittel bzw. dem zweiten Festlegemittel separate oder separierbare Bauteile ausgebildet sind und/oder dass das erste Leitmittel und das erste Festlegemittel und/oder das zweite Leitmittel und das zweite Festlegemittel jeweils ein gemeinsames Bauteil umfassen.

Wenn das erste Leitmittel und das zweite Leitmittel kabelartig ausgebildet sind und als separate Bauteile bezüglich des ersten Festlegemittels, bzw. des zweiten Festlegemittels ausgebildet sind, sind das erste Leitmittel und das erste Festlegemittel vormontierbar, lösbar oder unlösbar miteinander fügbar. Das Gleiche gilt für das zweite Leitmittel und das zweite Festlegemittel.

Wenn das erste Leitmittel und das erste Festlegemittel sowie das zweite Leitmittel und das zweite Festlegemittel jeweils ein gemeinsames Bauteil umfassen, kann die Leitung durch das Material des Festlegemittels realisiert sein. Solchenfalls kann das erste Leitmittel und/oder das zweite Leitmittel beispielsweise in ein Textil eingewebt sein, wenn das erste Festlegemittel und/oder das zweite Festlegemittel ein solches Textil umfassen.

Darüber hinaus erweist es sich als vorteilhaft, wenn das erste Festlegemittel mindestens einen quer zur Längsrichtung flexibel biegbaren Abschnitt umfasst, der in Längsrichtung starr oder elastisch verformbar ist, und/oder das zweite Festlegemittel mindestens einen quer zur Längsrichtung flexibel biegbaren Abschnitt umfasst, der in Längsrichtung starr oder elastisch verformbar ist.

Solchenfalls kann die Festlegeeinrichtung an unterschiedlichen Geometrien der Fahrzeugkomponente ohne Weiteres angepasst werden.

Das erste Festlegemittel und/oder das zweite Festlegemittel können in Gänze aus dem in Längsrichtung flexibel biegbarem Abschnitt gebildet sein oder den in Längsrichtung quer zur Längsrichtung flexibel biegbaren Abschnitt nur abschnittsweise umfassen.

Bei einer Ausführungsform der Festlegevorrichtung ist vorgesehen, dass das erste Koppelelement einen ersten Kontaktabschnitt des ersten Leitmittels und/oder das zweite Koppelelement einen zweiten Kontaktabschnitt des zweiten Leitmittels umfasst, die in der gefügten Anordnung des Festlegemittels berührend miteinander gefügt sind.

Solchenfalls kann auf einfache Weise gewährleistet werden, dass der erste Leitabschnitt mit dem zweiten Leitabschnitt verbunden ist, sobald das erste Koppelelement mit dem zweiten Koppelelement verrastet ist.

Ferner kann das erste Koppelelement und/oder das zweite Koppelelement mindestens ein Spannmittel umfassen, um das erste Festlegemittel und/oder das zweite Festlegemittel spannen können. Hierdurch kann ein Bewegen des Körpers durch das Aufbringen einer Spannkraft reduziert werden.

Um ein Eindringen von Schmutz oder Feuchtigkeit an das erste Leitmittel, bzw. das zweite Leitmittel zu verhindern, erweist es sich als vorteilhaft, wenn die Festlegeeinrichtung mindestens ein erstes Dichtmittel umfasst, das zumindest in der ungefügten Anordnung der beiden Leitmittel das erste Leitmittel, insbesondere den ersten Kontaktabschnitt, abdichtet und/oder wenn die Festlegeeinrichtung mindestens ein zweites Dichtmittel umfasst, das zumindest in der ungefügten Anordnung der beiden Leitmittel das zweite Leitmittel, insbesondere den zweiten Kontaktabschnitt, abdichtet.

Hierbei können das erste Dichtmittel und das zweite Dichtmittel in ihrer Ausführung beliebig sein, sofern sie die Funktion erfüllen, Schmutz und/oder Feuchtigkeit von dem ersten Kontaktabschnitt, bzw. dem zweiten Kontaktabschnitt fernzuhalten.

Das erste Dichtmittel und/oder das zweite Dichtmittel lassen sich einfach und kostengünstig herstellen, wenn das erste Dichtmittel und/oder das zweite Dichtmittel lösbar oder unlösbar am ersten Festlegemittel bzw. am zweiten Festlegemittel festgelegt ist und insbesondere deckelartig ausgebildet ist.

Die Festlegeeinrichtung lässt sich kompakt und kostengünstig herstellen, wenn der erste Kontaktabschnitt, das erste Koppelelement, das mindestens eine Schnappglied des ersten Koppelelements und/oder das erste Dichtmittel ein gemeines Bauteil, insbesondere spritzgussteil, umfassen und/oder dass das der zweite Kontaktabschnitt, das zweite Koppelelement, das mindestens eine Schnappglied des zweiten Koppelelements und/oder das zweite Dichtmittel ein gemeines Bauteil, insbesondere spritzgussteil, umfassen.

Darüber hinaus wird die Aufgabe gelöst durch eine Gepäcktragevorrichtung zum Anordnen auf oder an einem Kraftfahrzeug, Neigefahrzeug, mit mindestens einem Gepäckbehältnis und mit mindestens einer Festlegeeinrichtung, insbesondere mit mindestens einem der zuvor genannten Merkmale Festlegeeinrichtung zum lösbaren Festlegen des als Gepäckbehältnis ausgebildeten Körpers an dem Kraftfahrzeug, das mindestens ein erstes Festlegemittel, das am Körper festlegbar oder festgelegt ist, das mindestens ein zweites Festlegemittel, das an einer lastaufnehmenden Fahrzeugkomponente des Kraftfahrzeugs festlegbar oder festgelegt ist und das mit dem ersten Festlegemittel in einer gekoppelten Anordnung lösbar gefügt ist, um den Körper an der Fahrzeugkomponente festzulegen, und das mindestens eine elektrische Leitung umfasst, die von der Fahrzeugkomponente zum Körper führbar und am Körper zum Versorgen eines elektrischen Verbrauchers festlegbar ist. Die Gepäcktragevorrichtung ist dadurch gekennzeichnet, dass das erste Festlegemittel ein erstes Leitmittel der elektrischen Leitung und das zweite Festlegemittel ein zweites Leitmittel der elektrischen Leitung umfasst, wobei das erste Leitmittel und das zweite Leitmittel in der gekoppelten Anordnung der Festlegemittel miteinander elektrisch leitend verbindbar oder verbunden sind.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Festlegeeinrichtung und der Gepäcktragevorrichtung.

In der Zeichnung zeigt:
- Figur 1: Eine perspektivische Seitenansicht auf eine Gepäcktragevorrichtung mit Festlegeeinrichtung;
- Figur 2: Eine Draufsicht auf ein Ausführungsbeispiel der Festlegevorrichtung;
- Figur 3: Eine detaillierte Draufsicht auf ein erstes Koppelelement der Festlegeeinrichtung;
- Figur 4: Eine detaillierte Draufsicht auf ein zweites Koppelelement der Festlegeeinrichtung;
- Figur 5: Eine Draufsicht auf das zweite Koppelelement gemäß Figur 4.

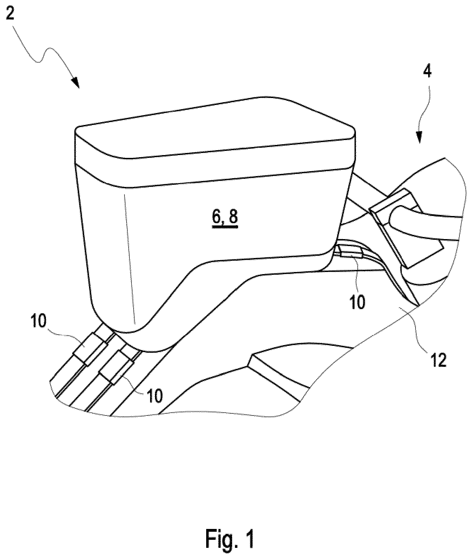

Figur 1 zeigt eine insgesamt mit dem Bezugszeichen 2 versehene Gepäcktragevorrichtung, die an einem Kraftfahrzeug 4 anordenbar ist. Die Gepäcktragevorrichtung 2 umfasst einen als Gepäckbehälter 6 ausgebildeten Körper 8, der durch mindestens eine Festlegeeinrichtung 10 an einer Fahrzeugkomponente 12 des Kraftfahrzeugs 4 festlegbar ist.

Figur 1 zeigt ein Ausführungsbeispiel der Gepäcktragevorrichtung 2, bei dem die Gepäcktragevorrichtung 2 insgesamt drei Festlegeeinrichtungen 10 umfasst.

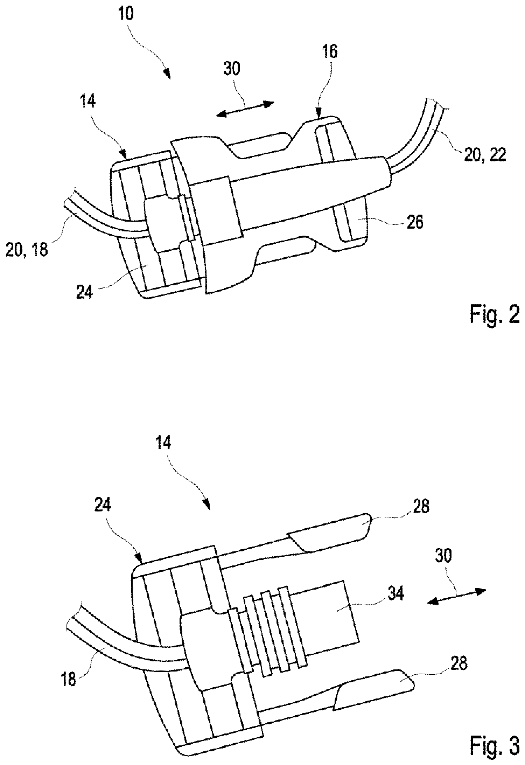

Anhand der Figuren 2 bis 5 wird auf eine Ausführungsform der Festlegeeinrichtung 10 eingegangen.

Figur 2 zeigt eine Festlegeeinrichtung 10 in einer gefügten Anordnung. In dieser ist ein erstes Festlegemittel 14 an einem zweiten Festlegemittel 16 gekoppelt festgelegt. Darüber hinaus ist in das erste Festlegemittel 14 ein erstes Leitmittel 18 einer elektrischen Leitung 20 integriert. In das zweite Festlegemittel 18 ist ein zweites Leitmittel 22 der Leitung 20 integriert.

Figur 2 zeigt ein Ausführungsbeispiel der Festlegeeinrichtung 10, bei der das erste Festlegemittel 14 und das zweite Festlegemittel 16 einen quer zu ihrer Längsrichtung flexibel biegbaren Abschnitt umfassen. Das erste Festlegemittel 14 umfasst ein erstes Koppelelement 24, an dem das zweite Festlegemittel 16 mit einem zweiten Koppelelement 26 lösbar festlegbar ist. Hierzu umfasst das erste Koppelelement 24 des ersten Festlegemittels 14 bei dem in den Figuren ersichtlichen Ausführungsbeispiel 2 Schnappglieder 28, die quer zur Fügerichtung 30 bewegbar sind und in der gekoppelten Anordnung in mindestens einer Aussparung 32 des zweiten Koppelelements 26 entgegen der Fügerichtung 30 einen Hintergriff bildend, eingreifbar sind.

Darüber hinaus umfasst das erste Koppelelement 24 einen ersten Kontaktabschnitt 34 des ersten Leitmittels 18, der in der gefügten Anordnung der Festlegemittel 14, 16 mit einem zweiten Kontaktabschnitt 36 des zweiten Leitmittels 22 berührend gefügt ist. Hierdurch wird die elektrische Leitung 20 gebildet.

Figur 3 zeigt eine Detailansicht des ersten Koppelelements 24 mit seinen beiden Schnappgliedern 28 und dem ersten Kontaktabschnitt 34.

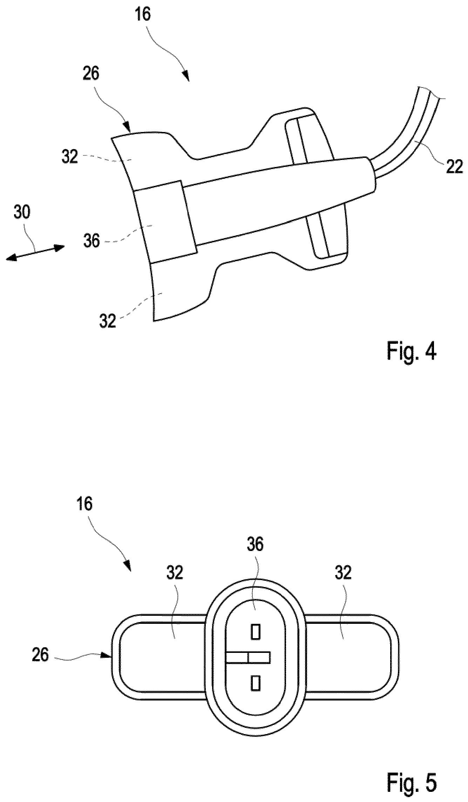

Figur 4 zeigt eine Detailansicht des zweiten Koppelelements 26 mit den beiden Aussparungen 32, in die die Schnappglieder 28 des ersten Koppelelements 24 in der gefügten Anordnung verrastbar sind sowie mit dem zweiten Kontaktabschnitt 36 des zweiten Leitmittels 22.

Figur 5 zeigt eine Draufsicht auf das Ausführungsbeispiel des zweiten Koppelelements 26 gemäß Figur 4.

Im Folgenden wird kurz die Wirkungsweise der Festlegeeinrichtung 10, bzw. der Gepäcktragevorrichtung 2 erläutert:
Beim Anordnen eines als Gepäckbehältnis 6 ausgebildeten Körpers 8 an einer Fahrzeugkomponente 12 des Kraftfahrzeugs 4, wird das an dem Körper 8 festgelegte erste Festlegemittel 14 mit dem an der Fahrzeugkomponente 12 verbundenen zweiten Festlegemittel 16 festgelegt. Hierdurch wird der als Gepäckbehältnis 6 ausgebildeter Körper 8 am Kraftfahrzeug 4 festgelegt.

Gleichzeitig mit Fügen des ersten Festlegemittels 14 mit dem zweiten Festlegemittel 16 wird das erste Leitmittel 18 mit dem zweiten Leitmittel 22 elektrisch verbunden, wodurch beide Leitmittel 18, 22 die elektrische Leitung 20 bilden. Durch die elektrische Leitung 20 ist ein im als Gepäckbehältnis 6 ausgebildeten Körper 8 angeordneter elektrischer Verbraucher mit einer im Kraftfahrzeug 4 angeordneten elektrischen Energiequelle verbindbar und mit einer elektrischen Energie versorgbar.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen wesentlich sein.

### Bezugszeichenliste

- 2: Gepäcktragevorrichtung
- 4: Kraftfahrzeug
- 6: Gepäckbehälter
- 8: Körper
- 10: Festlegeeinrichtung
- 12: Fahrzeugkomponente
- 14: erstes Festlegemittel
- 16: zweites Festlegemittel
- 18: erstes Leitmittel
- 20: elektrische Leitung
- 22: zweites Leitmittel
- 24: erstes Koppelelement
- 26: zweites Koppelelement
- 28: Schnappglied
- 30: Fügerichtung
- 32: Aussparung
- 34: erster Kontaktabschnitt
- 36: zweiter Kontaktabschnitt

## Patentansprüche

1. System aus Kraftfahrzeug (4), wie Neigefahrzeug, und Körper (8), mit einer Festlegeeinrichtung (10) zum lösbaren Festlegen des Körpers (8) an dem Kraftfahrzeug (4) die mindestens ein erstes Festlegemittel (14), das am Körper (8) festgelegt ist, die mindestens ein zweites Festlegemittel (16), das an einer lastaufnehmenden Fahrzeugkomponente (12) des Kraftfahrzeugs (4) festgelegt ist und das mit dem ersten Festlegemittel (14) in einer gekoppelten Anordnung lösbar gefügt ist, um den Körper (8) an der Fahrzeugkomponente (12) festzulegen, und die mindestens eine elektrische Leitung (20) umfasst, die von der Fahrzeugkomponente (12) zum Körper (8) geführt und am Körper (8) zum Versorgen eines elektrischen Verbrauchers festgelegt ist, wobei das erste Festlegemittel (14) ein erstes Leitmittel (18) der elektrischen Leitung (20) und das zweite Festlegemittel (16) ein zweites Leitmittel (22) der elektrischen Leitung (20) umfasst, wobei das erste Leitmittel (18) und das zweite Leitmittel (22) in der gekoppelten Anordnung der Festlegemittel (14, 16) miteinander elektrisch leitend verbunden sind und wobei das erste Festlegemittel (14) an seinem dem zweiten Festlegemittel (16) zugewandten Ende ein mechanisches erstes Koppelelement (24) umfasst, an dem das zweite Festlegemittel (16) mit einem zweiten Koppelelement (26), das an dem dem ersten Koppelelement (24) zugewandten Ende des zweiten Koppelelements (26) angeordnet ist, lösbar festlegbar ist, **dadurch gekennzeichnet, dass** das erste Koppelelement (24) mindestens ein Schnappglied (28) umfasst, das beim Fügen des zweiten Koppelelements (26) an das erste Koppelelement (24) quer oder schräg zur Fügerichtung (30) bewegbar und in der gekoppelten Anordnung in mindestens einer Aussparung (32) des zweiten Koppelelements (26) quer oder schräg zur Fügerichtung (30) einrastbar ist und entgegen der Fügerichtung (30) einen Hintergriff bildet.

2. System nach Anspruch 1, **dadurch gekennzeichnet, dass** das erste Leitmittel (18) und das zweite Leitmittel (22) kabelartig und/oder als von dem ersten Festlegemittel (14), bzw. dem zweiten Festlegemittel (16) separate oder separierbare Bauteile ausgebildet sind und/oder dass das erste Leitmittel (18) und das erste Festlegemittel (14) und/oder das zweite Leitmittel (22) und das zweite Festlegemittel (16) jeweils ein gemeinsames Bauteil umfassen.

3. System nach einem der Ansprüche 1 oder 2, **dadurch gekennzeichnet, dass** das erste Festlegemittel (14) mindestens einen quer zur Längsrichtung flexibel biegbaren Abschnitt umfasst, der in Längsrichtung starr oder elastisch verformbar ist, und/oder das zweite Festlegemittel (16) mindestens einen quer zur Längsrichtung flexibel biegbaren Abschnitt umfasst, der in Längsrichtung starr oder elastisch verformbar ist.

4. System nach einem der vorhergehenden Ansprüche, **dadurch gekennzeichnet, dass** das erste Koppelelement (24) einen ersten Kontaktabschnitt (34) des ersten Leitmittels (18) und/oder das zweite Koppelelement (26) einen zweiten Kontaktabschnitt (36) des zweiten Leitmittels (22) umfasst, die in der gefügten Anordnung des Festlegemittels (16) berührend miteinander gefügt sind.

5. System nach einem der vorhergehenden Ansprüche, **gekennzeichnet durch** mindestens ein erstes Dichtmittel, das zumindest in der ungefügten Anordnung der beiden Leitmittel (18, 22) das erste Leitmittel (18), insbesondere den ersten Kontaktabschnitt (34), abdichtet und/oder durch mindestens ein zweites Dichtmittel, das zumindest in der ungefügten Anordnung der beiden Leitmittel (18, 22) das zweite Leitmittel (22), insbesondere den zweiten Kontaktabschnitt (36), abdichtet.

6. System nach Anspruch 5, **dadurch gekennzeichnet, dass** das erste Dichtmittel und/oder das zweite Dichtmittel lösbar oder unlösbar am ersten Festlegemittel (14) bzw. am zweiten Festlegemittel (16) festgelegt ist und insbesondere deckelartig ausgebildet ist.

7. System nach einem der vorhergehenden Ansprüche, **dadurch gekennzeichnet, dass** der erste Kontaktabschnitt (34), das erste Koppelelement (24), das mindestens eine Schnappglied (28) des ersten Koppelelements (24) und/oder das erste Dichtmittel ein gemeines Bauteil, insbesondere spritzgussteil, umfassen und/oder dass das der zweite Kontaktabschnitt (36), das zweite Koppelelement (26), das mindestens eine Schnappglied (28) des zweiten Koppelelements (26) und/oder das zweite Dichtmittel ein gemeines Bauteil, insbesondere spritzgussteil, umfassen.

8. Gepäcktragevorrichtung (2) zum Anordnen auf oder an einem System aus Kraftfahrzeug (4), wie Neigefahrzeug, und Körper (8) nach einem der Ansprüche 1 bis 7 mit mindestens einer Festlegeeinrichtung (10), zum lösbaren Festlegen des als Gepäckbehältnis (6) ausgebildeten Körpers (8) an dem Kraftfahrzeug (4), das mindestens ein erstes Festlegemittel (14), das am Körper (4) festgelegt ist, das mindestens ein zweites Festlegemittel (16), das an einer lastaufnehmenden Fahrzeugkomponente (12) des Kraftfahrzeugs (4) festgelegt ist und das mit dem ersten Festlegemittel (14) in einer gekoppelten Anordnung lösbar gefügt ist, um den Körper (8) an der Fahrzeugkomponente (12) festzulegen, und das mindestens eine elektrische Leitung (20) umfasst, die von der Fahrzeugkomponente (12) zum Körper (8) geführt und am Körper (8) zum Versorgen eines elektrischen Verbrauchers festgelegt ist.

## Claims

1. System consisting of a motor vehicle (4), such as a tilting vehicle, and a body (8), having a fixing device (10) for detachably fixing the body (8) to the motor vehicle (4), which fixing device comprises at least one first fixing means (14) which is fixed to the body (8), at least one second fixing means (16) which is fixed to a load-bearing vehicle component (12) of the motor vehicle (4) and which is detachably joined to the first fixing means (14) in a coupled arrangement in order to fix the body (8) to the vehicle component (12), and at least one electrical line (20) which is guided from the vehicle component (12) to the body (8) and is fixed to the body (8) in order to supply an electrical load, wherein the first fixing means (14) comprises a first conducting means (18) of the electrical line (20) and the second fixing means (16) comprises a second conducting means (22) of the electrical line (20), wherein the first conducting means (18) and the second conducting means (22) are electrically conductively connected to one another in the coupled arrangement of the fixing means (14, 16), and wherein the first fixing means (14) comprises a mechanical first coupling element (24) at its end facing the second fixing means (16), to which coupling element the second fixing means (16) can be detachably fixed by a second coupling element (26), which is arranged at that end of the second coupling element (26) which faces the first coupling element (24), **characterized in that** the first coupling element (24) comprises at least one snap-in member (28) which, as the second coupling element (26) is joined to the first coupling element (24), is movable transversely or obliquely with respect to the joining direction (30) and, in the coupled arrangement, can be latched into at least one recess (32) in the second coupling element (26), transversely or obliquely with respect to the joining direction (30), and forms a catch counter to the joining direction (30).

2. System according to Claim 1, **characterized in that** the first conducting means (18) and the second conducting means (22) are cable-like and/or formed as components that are separate or can be separated from the first fixing means (14) and the second fixing means (16), respectively, and/or **in that** the first conducting means (18) and the first fixing means (14) and/or the second conducting means (22) and the second fixing means (16) each comprise a common component.

3. System according to either of Claims 1 and 2, **characterized in that** the first fixing means (14) comprises at least one section that can be bent flexibly transversely to the longitudinal direction, which is rigid or elastically deformable in the longitudinal direction, and/or the second fixing means (16) comprises at least one section that can be bent flexibly transversely to the longitudinal direction, which is rigid or elastically deformable in the longitudinal direction.

4. System according to one of the preceding claims, **characterized in that** the first coupling element (24) comprises a first contact section (34) of the first conducting means (18) and/or the second coupling element (26) comprises a second contact section (36) of the second conducting means (22), which, in the joined arrangement of the fixing means (16) are joined to one another so as to make contact.

5. System according to one of the preceding claims, **characterized by** at least one first sealing means which, at least in the non-joined arrangement of the two conducting means (18, 22), seals off the first conducting means (18), in particular the first contact section (34), and/or by at least one second sealing means which, at least in the non-joined arrangement of the two conducting means (18, 22), seals off the second conducting means (22), in particular the second contact section (36).

6. System according to Claim 5, **characterized in that** the first sealing means and/or the second sealing means is fixed detachably or non-detachably to the first fixing means (14) and to the second fixing means (16), respectively, and, in particular, is formed in the manner of a cover.

7. System according to one of the preceding claims, **characterized in that** the first contact section (34), the first coupling element (24), the at least one snap-in member (28) of the first coupling element (24) and/or the first sealing means comprise a common component, in particular an injection-moulded part, and/or **in that** the second contact section (36), the second coupling element (26), the at least one snap-in member (28) of the second coupling element (26) and/or the second sealing means comprise a common component, in particular an injection-moulded part.

8. Luggage-carrying device (2) for arrangement on or at a system consisting of a motor vehicle (4), such as a tilting vehicle, and a body (8) according to one of Claims 1 to 7, having at least one fixing device (10), for detachably fixing the body (8) formed as a luggage container (6) to the motor vehicle (4), which comprises at least one first fixing means (14) which is fixed to the body (4), at least one second fixing means (16) which is fixed to a load-bearing vehicle component (12) of the motor vehicle (4) and which is detachably joined to the first fixing means (14) in a coupled arrangement in order to fix the body (8) to the vehicle component (12), and at least one electrical line (20) which is guided from the vehicle component (12) to the body (8) and is fixed to the body (8) in order to supply an electrical load.

## Revendications

1. Système composé d'un véhicule automobile (4), tel qu'un véhicule pendulaire, et d'un corps (8), avec un appareil de fixation (10) pour fixer de manière amovible le corps (8) au véhicule automobile (4), qui comprend au moins un premier moyen de fixation (14) qui est fixé au corps (8), au moins un deuxième moyen de fixation (16) qui est fixé à un composant de véhicule (12), recevant la charge, du véhicule automobile (4) et qui est assemblé de manière amovible au premier moyen de fixation (14) dans un agencement couplé, pour fixer le corps (8) au composant de véhicule (12), et au moins une conduite électrique (20) qui est guidée depuis le composant de véhicule (12) jusqu'au corps (8) et qui est fixée au corps (8) pour alimenter un consommateur électrique, le premier moyen de fixation (14) comprenant un premier moyen de conduction (18) de la conduite électrique (20) et le deuxième moyen de fixation (16) comprenant un deuxième moyen de conduction (22) de la conduite électrique (20), le premier moyen de conduction (18) et le deuxième moyen de conduction (22) étant reliés entre eux de manière électriquement conductrice dans l'agencement couplé des moyens de fixation (14, 16) et le premier moyen de fixation (14) comprenant à son extrémité tournée vers le deuxième moyen de fixation (16) un premier élément de couplage mécanique (24) auquel le deuxième moyen de fixation (16) peut être fixé de manière amovible par un deuxième élément de couplage (26) qui est agencé à l'extrémité du deuxième élément de couplage (26) tournée vers le premier élément de couplage (24), **caractérisé en ce que** le premier élément de couplage (24) comprend au moins un membre d'encliquetage (28) qui, lors de l'assemblage du deuxième élément de couplage (26) au premier élément de couplage (24), peut être déplacé transversalement ou obliquement par rapport à la direction d'assemblage (30) et, dans l'agencement couplé, peut être encliqueté dans au moins un évidement (32) du deuxième élément de couplage (26) transversalement ou obliquement par rapport à la direction d'assemblage (30) et forme une prise arrière à l'encontre de la direction d'assemblage (30).

2. Système selon la revendication 1, **caractérisé en ce que** le premier moyen de conduction (18) et le deuxième moyen de conduction (22) sont réalisés à la manière d'un câble et/ou en tant que composants séparés ou séparables du premier moyen de fixation (14) et du deuxième moyen de fixation (16) et/ou **en ce que** le premier moyen de conduction (18) et le premier moyen de fixation (14) et/ou le deuxième moyen de conduction (22) et le deuxième moyen de fixation (16) comprennent chacun un composant commun.

3. Système selon l'une quelconque des revendications 1 ou 2, **caractérisé en ce que** le premier moyen de fixation (14) comprend au moins une section flexible transversalement à la direction longitudinale, qui est rigide ou élastiquement déformable dans la direction longitudinale, et/ou le deuxième moyen de fixation (16) comprend au moins une section flexible transversalement à la direction longitudinale, qui est rigide ou élastiquement déformable dans la direction longitudinale.

4. Système selon l'une quelconque des revendications précédentes, **caractérisé en ce que** le premier élément de couplage (24) comprend une première section de contact (34) du premier moyen de conduction (18) et/ou le deuxième élément de couplage (26) comprend une deuxième section de contact (36) du deuxième moyen de conduction (22), qui sont assemblées en contact l'une avec l'autre dans l'agencement assemblé du moyen de fixation (16).

5. Système selon l'une quelconque des revendications précédentes, **caractérisé par** au moins un premier moyen d'étanchéité assurant l'étanchéité du premier moyen de conduction (18), notamment de la première section de contact (34), au moins dans l'agencement non assemblé des deux moyens de conduction (18, 22) et/ou par au moins un deuxième moyen d'étanchéité assurant l'étanchéité du deuxième moyen de conduction (22), notamment de la deuxième section de contact (36), au moins dans l'agencement non assemblé des deux moyens de conduction (18, 22).

6. Système selon la revendication 5, **caractérisé en ce que** le premier moyen d'étanchéité et/ou le deuxième moyen d'étanchéité est fixé de manière amovible ou inamovible au premier moyen de fixation (14) ou au deuxième moyen de fixation (16) et est notamment réalisé en forme de couvercle.

7. Système selon l'une quelconque des revendications précédentes, **caractérisé en ce que** la première section de contact (34), le premier élément de couplage (24), l'au moins un membre d'encliquetage (28) du premier élément de couplage (24) et/ou le premier moyen d'étanchéité comprennent un composant commun, notamment une pièce moulée par injection, et/ou **en ce que** la deuxième section de contact (36), le deuxième élément de couplage (26), l'au moins un membre d'encliquetage (28) du deuxième élément de couplage (26) et/ou le deuxième moyen d'étanchéité comprennent un composant commun, notamment une pièce moulée par injection.

8. Dispositif de transport de bagages (2) à agencer sur ou contre un système composé d'un véhicule automobile (4), tel qu'un véhicule pendulaire, et d'un corps (8) selon l'une quelconque des revendications 1 à 7, avec au moins un appareil de fixation (10), pour fixer de manière amovible le corps (8) réalisé sous forme de conteneur à bagages (6) au véhicule automobile (4), qui comprend au moins un premier moyen de fixation (14), qui est fixé au corps (4), au moins un deuxième moyen de fixation (16), qui est fixé à un composant de véhicule (12), recevant la charge, du véhicule automobile (4) et qui est assemblé de manière amovible au premier moyen de fixation (14) dans un agencement couplé pour fixer le corps (8) au composant de véhicule (12), et qui comprend au moins une conduite électrique (20) qui est guidée depuis le composant de véhicule (12) jusqu'au corps (8) et qui est fixée au corps (8) pour alimenter un consommateur électrique.
